# EUROPEAN PATENT APPLICATION

(11) **EP 1 146 089 A1**
(43) Date of publication of application: **17.10.2001**
(21) Application number: 01302910.3
(22) Date of filing: 28.03.2001
(51) Int. Cl.: C09C 1/42

(54) **Methods for bleaching kaolin clay and other minerals and bleached products obtained by the method**

(30) Priority: 10.04.2000 US 546356
(71) Applicant: ROHM AND HAAS COMPANY, Philadelphia, Pennsylvania 19106-2399 (US)
(72) Inventor: Atkinson, Maurice Lynwood, Tucker, Georgia 30084 (US); Fleming, Mary Elizabeth, Concord, Massachusetts 01742 (US)
(74) Representative: Kent, Venetia Katherine

(57) **Abstract**

Improved methods for bleaching kaolin clay and other minerals are provided. More particularly, methods of the present invention employ a hydrosulfite or bisulfite material and a second reducing agent, preferably a reducing agent that contains a Group III element, such as a borohydride, to increase the brightness of kaolin clay and other minerals and reduce color present therein. Methods of the present invention are particularly useful in industries which utilize kaolin clays.

## Description

### BACKGROUND OF THE INVENTION

### 1. Field of the Invention

The invention relates to improved methods for bleaching kaolin clay and other minerals. More particularly, methods of the present invention employ a hydrosulfite or bisulfite material and a second reducing agent, preferably a Group III reagent such as a borohydride, to increase the brightness of kaolin and other minerals and reduce color components present therein. Methods of the present invention are particularly useful in industries which utilize kaolin clays.

### 2. Background

Kaolin clay is useful in several industries, including the paper industry, the porcelain and fine china industries and many others. (See, generally, *The Encyclopedia of Chemical Technology,* Kirk-Othmer (1964), 2^{nd} ed., Vol. 5:554, 581-582). For example, the paper industry utilizes large amounts of kaolin clay as a filler or coating for paper and paper board. A very white, bright product is required for this use.

When raw kaolin is mined, it usually has a brightness rating of only about 75-80% ISO relative to the standard magnesium oxide (value of 100). The primary sources of color in kaolins are hydrated iron oxides, ilmenite, substituted iron, tourmaline and micas.

In order to improve brightness and reduce color in kaolin, e.g., to a brightness range in excess of 80% ISO, bleaching agents may be used. However, corrosive chemicals or chemicals that may leave potentially noxious residues in products or by-product process streams are highly undesirable. Thus, it would be highly desirable to develop processes for bleaching kaolin and other minerals which employ chemicals that are relatively "environmentally friendly".

Additionally, the costs associated with bleaching processes are typically quite significant. As such, these processes present a substantial expense to operators of kaolin plants. It has been reported that the cost of bleaching chemicals alone for a single large kaolin plant can exceed several million dollars per year. Thus, it would be highly desirable to develop processes for bleaching minerals, particularly kaolin, which are more cost effective, e.g., processes which require reduced bleach consumption. Such processes would present significant commercial value to the industries using kaolin and to consumers as well.

Various methods have been employed to bleach kaolin clay. Some early work involved oxidatively bleaching the clay with ozone. See, e.g., U.S. 3,635,744 and U.S. 3,674,558. Similarly, U.S. Patent No. 4,935,391 reports use of hydrogen peroxide prior to or simultaneously with ozone using a kaolin slurry having a pH adjusted to about 5 to 9.

See also, U.S. Patent No. 5,753,029, for its report of an improved method for bleaching kaolin clay. That patent reports treatment of the clay with a combination of an inorganic condensed phosphate, sodium hypochlorite and ozone.

Other processes have involved preparing a kaolin slurry in water (e.g., to provide about 20-25% solids), adjusting the pH to about 3-4.5 with a suitable acid, and adding sodium dithionite (also known as sodium hydrosulfite, Na₂S₂O₄) to the slurry (e.g., at about 2-15 lb/ton of clay).

That process and others like it presented notable disadvantages, however. For example, sodium dithionite is unstable in acidic solutions. Thus, a large excess of that chemical was typically required for the bleaching step. Even with the excess amount, dithionite's use as a bleaching agent was found to be effective only for a very limited amount of time, e.g., about one hour. Further, it was shown that as the dithionite became exhausted, aerobic oxygen again slowly re-oxidized the remaining iron, so that at least some of the effectiveness of the bleaching agent, dithionite, was wasted. Still further, it has been found that use of sodium hydrosulfite for bleaching applications produces sodium bisulfite as a by-product in significant amounts.

Other processes were developed for preventing the undesirable reoxidation reaction, referred to in the industry as "reversion". See, for instance, U.S. 4,002,487. That patent reports a process for bleaching kaolin clay using sodium hydrosulfite (Na₂S₂O₄). By adding hydroxylamine, or a salt thereof, to the clay after the bleaching step, reversion was reported to be reduced.

Still, it remains desirable to develop improved, alternate processes for bleaching minerals, particularly kaolin clay, for use in industry. It is highly desirable that such processes be kind to the environment, i.e., that they employ non-corrosive bleaching agents and offer a reduction of undesirable effluents (by-products) such as sulfur compounds in the process stream. It also would be highly desirable to develop processes that would offer improved economics to industry and to end-user consumers.

### SUMMARY OF THE INVENTION

We have now discovered new processes for bleaching kaolin clay and other minerals which utilize bleaching mixtures of a hydrosulfite or bisulfite material and a second reductive agent to produce materials of high brightness. Indeed, kaolin clay treated with bleaching mixtures of the present invention provide notably higher brightness measurements than provided by comparable use of a single component bleaching agent, e.g., hydrosulfite or bisulfite alone.

While not wishing to be bound by theory, it is believed that different chromophores may react more readily with one or more particular bleaching agent. Thus, methods of the present invention employ a combination of bleaching agents for enhanced bleaching. Such methods have been found to be particularly effective in providing bleached clays of superior brightness and reduced color content.

Methods of the invention include use of a bleaching composition that comprises a hydrosulfite and/or bisulfite in combination with a second reductive agent, particularly a reductive agent that comprises a Group III element, such as an aluminum or boron reagent. Preferred reagents also include a hydride of the Group III element, a salt of an ionic reductant, particularly an alkali metal salt of a borohydride or an aluminum hydride, e.g. sodium borohydride. References herein to a "second" reducing or reductive agent indicate that the agent is a distinct material from the hydrosulfite or bisulfite.

Preferably, the prepared bleaching composition comprising the hydrosulfite or bisulfite and the second reducing agent is admixed with the material to be bleached (e.g., kaolin clay). However, other processes can be employed to provide the admixture of the material to be bleached, hydrosulfite or bisulfite and the second reducing agent. For instance, the second reducing agent can be added to an admixture of the material to be bleached and the hydrosulfite or bisulfite.

We found that borohydride alone does not normally improve the brightness or color of kaolin. We then surprisingly discovered that depleted hydrosulfite (bisulfite by-product) can interact with borohydride or other appropriate reductive agent to produce a second stage or regenerated hydrosulfite. That is, without being bound by theory, it is speculated that the use of a second reductive agent such as a borohydride in accordance with the invention can provide surprising *in situ* regeneration of bisulfite to hydrosulfite during a bleaching process. That *in-situ* regenerated hydrosulfite provides significant advantages, including reducing quantities of costly hydrosulfite that must be employed to achieve a target brightness level; reduced waste (bisulfite) levels; and production of clays of desirable lower viscosities as a result of decreased quantities of dissolved solids in the process stream.

These results are further surprising because reductive agents such as sodium borohydride have been shown to be very unstable under acidic conditions. For example, at a kaolin bleach pH of about 3.0, it would have been thought that by the time the sodium hydrosulfite reacted to form sodium bisulfite, borohydride would be decomposed. However, using methods of the present invention, i.e., introducing the second reducing agent pre-process stream, the reaction kinetics are such that the desirable reactions for the re-use of bisulfite are faster than the decomposition reactions.

In addition to kaolin clays, brightening processes of the invention are useful for improving color of other minerals and materials, particularly inorganic minerals and other materials that contain impurities that are responsive to decolorization by reductive chemistry. Such other minerals and materials can be readily identified, e.g. by simply treating the mineral or other material by a process of the invention and then evaluating the treated mineral or material for increased brightness.

Typically, minerals and other materials referred to herein as being inorganic embrace all substances except hydrocarbons and their derivatives, and all compounds that are not compounds of carbon, with the exception of carbon oxides and carbon disulfides (*Hawley's Condensed Chemical Dictionary*, 11^{th} ed., 1987, Van Nostrand Reinhold, New York).

Other aspects of the invention are discussed *infra*.

### DETAILED DESCRIPTION OF THE INVENTION

Methods of the present invention offer significant benefits to industries which utilize kaolin clay, including the paper industry, the porcelain and fine china industries and many others. For example, methods of the present invention provide improved economics, improved viscosity and less undesirable effluents.

Methods of the present invention generally comprise providing an aqueous admixture (e.g., suspension) of the material to be bleached (e.g., kaolin clay), providing a bleaching composition comprising a hydrosulfite or bisulfite and a second reducing agent, preferably an agent containing an element of Group III of the Periodic Table, such as a boron or aluminum reagent. Preferred second reducing agents also include a hydride of a Group III element, a salt of an ionic reductant, particularly an alkali metal salt of a borohydride or an aluminum hydride, e.g. sodium borohydride.

In one aspect of the invention, the bleaching mixture comprises a hydrosulfite, preferably sodium hydrosulfite, and the second reducing agent as described above. The bleaching mixture also may contains a mixture of hydrosulfite and bisulfite, and such a mixture will typically be present in situ during the bleaching process.

In another aspect of the invention, the bleaching composition comprises a bisulfite and the second reducing agent as described above. In a particularly preferred embodiment of this aspect of the invention, increased brightness of the processed clay or other minerals may be achieved by increasing the molar ratio of bisulfite (e.g., relative to the second reducing agent) in the bleaching mixture. In that way, more of a reducing environment is presented by virtue of the higher molar ratio of reductants.

Methods of the present invention may be carried out effectively under alkaline pH reaction conditions. However, it is more preferable to carry out such methods at an acidic pH. Generally, at an acidic pH, the admixture is much more manageable, e.g., easier to stir, mix, or otherwise agitate, resulting in particularly enhanced bleaching of the desired material.

Thus, in preferred embodiments of the present invention, the admixture of the material to be bleached and bleaching agents is acidic, particularly mildly acidic such as a pH no more acidic than 0, 0.5 or 1, but at least about 6 or 5. A pH range of about 1 to 5, more typically about 2 to 4, is generally preferred. A pH range of about 2.8 to 3.2 is particularly preferred.

The pH of the material to be bleached is typically adjusted using a dilute acid, preferably dilute sulfuric acid, e.g., 10% H₂SO₄. Other acids such as HCl, methanesulfonic acid and the like, as well as other chemicals, e.g. aluminum sulfate, also are suitable for such a pH adjustment.

The admixture of the material to be bleached, the hydrosulfite and/or bisulfite and second reducing agent may be suitably reacted at ambient temperatures, e.g., 25°C. Higher temperatures, such as up to about 50°C or 40°C, can be employed if desired for the bleaching process, although such elevated temperatures are generally not required.

The admixture of the material to be bleached, the hydrosulfite and/or bisulfite and second reducing agent are suitably agitated (e.g. paddle stirred) during at least a portion of the bleaching process. Optimal residence or reaction times of contacting the bleaching composition of the invention with a material to bleached can vary with reagents employed and can be readily determined empirically.

Suitably, a material to be bleached and a bleaching mixture of the invention are contacted no more than about 1, 2, or 3 hours. Good results can be achieved with reaction times of less than one hour, such as 0.75 or 0.5 hours. Reaction times of even ten minutes or less, e.g., one minute, also provide improved brightness. See the examples which follow for exemplary preferred reaction conditions.

In the case of kaolin clay, an aqueous suspension is preferably employed for treatment with a hydrosulfite or bisulfite and second reducing agent. Typical kaolin clay aqueous suspensions comprise kaolin clay in an amount of between about 5 and about 70 wt. % based on total weight of the suspensions, more preferably between about 10 and about 50 wt. % of kaolin clay based on total weight of the suspension, still more preferably between about 15 and about 35 wt. % of kaolin clay based on total weight of the suspension, most preferably about 20 wt. % of kaolin clay based on total weight of the suspension. The resulting suspension typically appears in the form of a slurry.

A particularly preferred bleaching mixture of the invention can be provided by adding sodium borohydride to sodium hydrosulfite or bisulfilte in the form of an aqueous mixture with sodium hydroxide, preferably comprising 10 to 25 wt. % NaBH₄ and 15 to 50 wt. % NaOH. A particularly suitable mixture comprises 12% NaBH₄, 40% NaOH and the remaining 48% water, all by weight.

The relative amounts employed of hydrosulfite or bisulfite to the second reducing agent may vary widely as will be appreciated by those skilled in the art. Generally, these materials are present in amounts sufficient to produce effective bleaching of the desired clay or other mineral.

Also, it has been found that quite minimal amounts of the second reducing agent can provide effective results. For example, the second reducing agent may be present at a concentration of 10 wt. % or less based on total combined weight of the hydrosulfite or bisulfite and the second reducing agent, or even 5, 4, 3, 2 or 1 wt.% or less based on total combined weight of the hydrosulfite or bisulfite and second reducing agent.

Preferably, the bleaching mixture is added to the slurry beneath the surface of the suspension of the material to be bleached. This addition is followed by gentle mixing. The mixture is typically allowed to stand for a period of time in order to permit completion of the bleaching reaction. It is generally preferred that the pH of the suspension be maintained at the above noted, preferred pH ranges throughout the bleaching reaction.

Preferable post-processing steps of the bleached material are well known to those skilled in the art. For example, such steps generally include the following: recovering the bleached material, e.g., by filtering the suspension; drying the filter cake; and pulverizing the dried filter cake. Pulverizing breaks up the dried filter cake so that the processed material is presented as a fine powder, ready to be measured for brightness and color values.

Brightness and color measurements of the bleached material are then taken. Both measurements may be made using a number of suitable spectrophotometers.

Methods of the present invention yield substantial cost savings since lower amounts of costly bleaching agents can be used to achieve kaolin clays having the required brightness and color standards, e.g., as required by the many industries which use kaolin clays.

Additionally, re-use of the sodium bisulfite by-product *in-situ* results in less process stream effluents which also is particularly desirable.

Further, using methods of the present invention, desirably improved viscosity is possible with respect to processed kaolin clays. This is attributed to lower dissolved solids present in suspension. For example, bleaching kaolin at a charge of 1 lb/ton sodium hydrosulfite adds 454 g solids into the slurry. To reach the same final brightness using methods of the present invention, a significantly lower amount of solids is added into the slurry. For instance, using 0.5 lb sodium hydrosulfite with 0.25 lb/ton sodium borohydride solution, only a total of 286 g solids is added into the slurry (227 g sodium hydrosulfite, 13.6 g sodium borohydride, and 45.4 g NaOH).

It has been shown that processed clays having relatively low viscosities are more easily and evenly spreadible as a filler or coating for paper and paper board. Lower viscosity clays also are desirable for use in other industries which utilize such clays, e.g., the porcelain and fine china industries, and many others.

Kaolin clays treated by processes of the invention provide exceptionally high brightness measurements, including ISO values of greater than about 80%, or even greater than about 85% or 90%. Using methods of the present invention, brightness gains may be achieved for kaolin clays between about 0.5% ISO and about 20% ISO, more preferably between about 0.5% and about 10% ISO. Using methods of the present invention, similar brightness gains may be achieved for a variety of other materials, e.g., up to about 10% ISO or up to about 20% ISO. Possibly even greater brightness gains may be achieved depending upon the degree of crudeness of the particular clay or other material to be bleached. (References herein to ISO values are as determined and specified in the examples below.)

The following non-limiting examples are illustrative of the invention. All documents mentioned herein are incorporated herein by reference.

### EXAMPLE 1.

Preparation of kaolin clay slurry. 20.0 g of kaolin clay was slurried in 80.0 g water (total weight: 100.0 g). The suspension was agitated for approximately 1 hour. The slurry was acidified, e.g, flocced with 10% sulfuric acid (10% H₂SO₄). See pH adjustments set forth in Table 1 below.

Preparation of bleaching mixture. A mixture of hydrosulfite (ranging in amounts of 0.5 lb/ton to 2.0 lb/ton) and sodium borohydride solution (12% NaBH₄, 40% NaOH 48% water, all by weight) were prepared separately. See the respective amounts set forth in Table 1 below.

Combination of clay slurry and bleaching mixture. The bleaching mixture was then added to the clay slurry beneath the surface of the suspension. The addition was followed by gentle mixing. The mixture was allowed to stand for about 15 minutes. At a residence time of about 15 minutes, the pH of the suspension was measured and adjusted to maintain a pH of between about 2.8 to about 3.2 using 10% H₂SO₄. After about an additional 15 minutes (about 30 minutes total residence time) the final pH was measured and bleaching was considered to be substantially complete.

Post-processing of clay. The bleached clay was recovered from the slurry using a Büchner funnel. The dry clay (filter cake) was dried in a circulating oven for one hour at 105°F, then pulverized.

Measurement of Brightness and Color. Brightness and color of the bleached clay were measured using a Technobrite Eric 500 spectrophotomer (manufactured by Technodyne Corp.) by known procedures.

In the below examples, brightness readings are presented as % ISO; color readings are presented as L* (whiteness measurement/Star Lab); a* (red to green spectrum); and b* (blue to yellow spectrum).

Example 1 produced clays of premium quality color and brightness. The experimental data and results are shown in Table 1 below.

**Table 1**

| Na Hydro. lb/ton | Na Borohydride Solution lb/ton | Initial pH | Adjusted pH | Final pH | Bright. % ISO | L* | a* | b* |
|---|---|---|---|---|---|---|---|---|
| 0.5 | 0 | 7.8 | 3.0 | 3.2 | 82.9 | 95.81 | 0.05 | 5.11 |
| 0.5 | 0.05 | 7.8 | 3.0 | 3.1 | 83.3 | 95.87 | 0.07 | 4.85 |
| 0.5 | 0.10 | 7.8 | 3.0 | 3.2 | 83.4 | 95.84 | 0.15 | 4.75 |
| 0.5 | 0.15 | 7.8 | 3.0 | 3.1 | 83.7 | 95.88 | 0.10 | 4.61 |
| 0.5 | 0.20 | 7.8 | 3.0 | 3.1 | 83.9 | 95.92 | 0.08 | 4.50 |
| 0.5 | 0.25 | 7.8 | 3.0 | 3.1 | 84.1 | 95.94 | 0.10 | 4.41 |
| 0.5 | 0.30 | 7.8 | 2.6 | 2.8 | 84.0 | 95.89 | 0.19 | 4.41 |
| 0.5 | 0.35 | 7.8 | 2.8 | 3.4 | 84.2 | 95.95 | 0.19 | 4.41 |
| 0.5 | 0.40 | 7.8 | 2.8 | 3.1 | 84.3 | 95.94 | 0.33 | 4.34 |
| 0.5 | 0.45 | 7.8 | 2.6 | 2.8 | 84.3 | 95.93 | 0.24 | 4.32 |
| 0.5 | 0.50 | 7.8 | 2.8 | 3.3 | 84.8 | 96.01 | 0.20 | 4.08 |
| 1.0 | 0 | 7.8 | 2.9 | 3.2 | 84.1 | 95.91 | 0.05 | 4.32 |
| 1.0 | 0.1 | 7.8 | 2.7 | 2.7 | 84.1 | 95.97 | 0.01 | 4.44 |
| 1.0 | 0.2 | 7.8 | 2.9 | 3.1 | 84.7 | 96.05 | -0.01 | 4.14 |
| 1.0 | 0.3 | 7.8 | 3.0 | 3.4 | 84.9 | 96.09 | -0.01 | 4.00 |
| 1.0 | 0.4 | 7.8 | 3.1 | 3.5 | 85.2 | 96.16 | -0.07 | 3.90 |
| 1.0 | 0.5 | 7.8 | 2.9 | 3.2 | 85.1 | 96.12 | -0.08 | 3.91 |
| 1.5 | 0 | 7.8 | 3.0 | 3.1 | 85.1 | 96.06 | 0.04 | 3.90 |
| 1.5 | 0.15 | 7.8 | 3.0 | 3.2 | 85.3 | 96.11 | -0.10 | 3.80 |
| 1.5 | 0.30 | 7.8 | 3.0 | 3.0 | 85.5 | 96.13 | -0.08 | 3.75 |
| 1.5 | 0.45 | 7.8 | 3.0 | 3.1 | 85.6 | 96.18 | -0.04 | 3.69 |
| 1.5 | 0.60 | 7.8 | 2.9 | 3.0 | 85.4 | 96.11 | -0.04 | 3.70 |
| 1.5 | 0.75 | 7.8 | 3.0 | 3.1 | 85.8 | 96.21 | -0.09 | 3.61 |
| 2.0 | 0 | 7.8 | 2.6 | 2.9 | 85.1 | 96.06 | 0.08 | 3.99 |
| 2.0 | 0.2 | 7.8 | 2.6 | 3.1 | 85.3 | 96.13 | 0.08 | 3.88 |
| 2.0 | 0.4 | 7.8 | 2.7 | 3.3 | 85.5 | 96.12 | 0.08 | 3.78 |
| 2.0 | 0.6 | 7.8 | 2.9 | 3.1 | 85.7 | 96.17 | 0.13 | 3.71 |
| 2.0 | 0.8 | 7.8 | 2.8 | 3.1 | 85.7 | 96.17 | 0.05 | 3.70 |
| 2.0 | 1.0 | 7.8 | 2.8 | 3.1 | 85.9 | 96.23 | 0.06 | 3.66 |

The data presented in this Example shows a benefit to using the bleaching mixture of hydrosulfite and borohydride as opposed to using hydrosulfite alone. The data also shows that using methods of the present invention, depleted hydrosulfite is regenerated *in-situ* to produce a second stage of bleaching which produces further brightening and color reduction. That is, without adding any additional hydrosulfite, methods of the present invention provide clays of premium brightness and reduced color. Additionally, due to the re-use of bisulfite *in-situ,* sulfur loading is significantly reduced.

### EXAMPLE 2

The procedure set forth in Example 1 above was carried out using 0.5 lb/ton hydrosulfite and sodium borohydride solution in amounts ranging from 0 lb/ton to 0.5 lb/ton. The resulting clay was of premium quality color and brightness. The experimental data and results are shown in Table 2 below.

**Table 2**

| Na Hydro. (lb/ton) | Na Borohydride Solution lb/ton | Initial pH | Adjusted pH | Final pH | Bright. (% ISO) | L* | a* | b* |
|---|---|---|---|---|---|---|---|---|
| 0.5 | 0 | 7.8 | 3.0 | 3.2 | 82.9 | 95.81 | 0.05 | 5.11 |
| 0.5 | 0.05 | 7.8 | 3.0 | 3.1 | 83.3 | 95.87 | 0.07 | 4.85 |
| 0.5 | 0.10 | 7.8 | 3.0 | 3.2 | 83.4 | 95.84 | 0.15 | 4.75 |
| 0.5 | 0.15 | 7.8 | 3.0 | 3.1 | 83.7 | 95.88 | 0.10 | 4.61 |
| 0.5 | 0.20 | 7.8 | 3.0 | 3.1 | 83.9 | 95.92 | 0.08 | 4.50 |
| 0.5 | 0.25 | 7.8 | 3.0 | 3.1 | 84.1 | 95.94 | 0.10 | 4.41 |
| 0.5 | 0.30 | 7.8 | 2.6 | 2.8 | 84.0 | 95.89 | 0.19 | 4.41 |
| 0.5 | 0.35 | 7.8 | 2.8 | 3.4 | 84.2 | 95.95 | 0.19 | 4.41 |
| 0.5 | 0.40 | 7.8 | 2.8 | 3.1 | 84.3 | 95.94 | 0.33 | 4.34 |
| 0.5 | 0.45 | 7.8 | 2.6 | 2.8 | 84.3 | 95.93 | 0.24 | 4.32 |
| 0.5 | 0.50 | 7.8 | 2.8 | 3.3 | 84.8 | 96.01 | 0.20 | 4.08 |

### EXAMPLE 3

The experiment of Example 1 was repeated in all essential details except that 1 lb/ton of hydrosulfite was used in place of 0.5 lb/ton and sodium borohydride solution was used in amounts ranging from 0 lb/ton to 0.5 lb/ton. The resulting clay was of premium quality color and brightness. The experimental data results are shown in Table 3 below.

**Table 3**

| Na Hydro. (lb/ton) | Na Borohydride Solution (lb/ton) | Initial pH | Adjusted pH | Final pH | Bright. (% ISO) | L* | a* | b* |
|---|---|---|---|---|---|---|---|---|
| 1.0 | 0 | 7.8 | 2.9 | 3.2 | 84.1 | 95.91 | 0.05 | 4.32 |
| 1.0 | 0.1 | 7.8 | 2.7 | 2.7 | 84.1 | 95.97 | 0.01 | 4.44 |
| 1.0 | 0.2 | 7.8 | 2.9 | 3.1 | 84.7 | 96.05 | -0.01 | 4.14 |
| 1.0 | 0.3 | 7.8 | 3.0 | 3.4 | 84.9 | 96.09 | -0.01 | 4.00 |
| 1.0 | 0.4 | 7.8 | 3.1 | 3.5 | 85.2 | 96.16 | -0.07 | 3.90 |
| 1.0 | 0.5 | 7.8 | 2.9 | 3.2 | 85.1 | 96.12 | -0.08 | 3.91 |

### EXAMPLE 4

The experiment of Example 1 was repeated in all essential details except that 1.5 lb/ton of hydrosulfite was used in place of 0.5 lb/ton and sodium borohydride solution was used in amounts ranging from 0 lb/ton to 0.75 lb/ton. The resulting clay was of premium quality color and brightness. The experimental data and results are shown in Table 4 below.

**Table 4**

| Na Hydro. (lb/ton) | Na Borohydride Solution (lb/ton) | Initial pH | Adjusted pH | Final pH | Bright. (% ISO) | L* | a* | b* |
|---|---|---|---|---|---|---|---|---|
| 1.5 | 0 | 7.8 | 3.0 | 3.1 | 85.1 | 96.06 | 0.04 | 3.90 |
| 1.5 | 0.15 | 7.8 | 3.0 | 3.2 | 85.3 | 96.11 | -0.10 | 3.80 |
| 1.5 | 0.30 | 7.8 | 3.0 | 3.0 | 85.5 | 96.13 | -0.08 | 3.75 |
| 1.5 | 0.45 | 7.8 | 3.0 | 3.1 | 85.6 | 96.18 | -0.04 | 3.69 |
| 1.5 | 0.60 | 7.8 | 2.9 | 3.0 | 85.4 | 96.11 | -0.04 | 3.70 |
| 1.5 | 0.75 | 7.8 | 3.0 | 3.1 | 85.8 | 96.21 | -0.09 | 3.61 |

### EXAMPLE 5

The experiment of Example 1 was repeated in all essential details except that 2.0 lb/ton of hydro was used in place of 0.5 lb/ton and sodium borohydride solution was used in amounts ranging from 0 lb/ton to 1.0 lb/ton. The resulting clay was of premium quality color and brightness. The experimental data and results are shown in Table 5 below.

**Table 5**

| Na Hydro. (lb/ton) | Na Borohydride Solution (lb/ton) | Initial pH | Adjusted pH | Final pH | Bright. (% ISO) | L* | a* | b* |
|---|---|---|---|---|---|---|---|---|
| 2.0 | 0 | 7.8 | 2.6 | 2.9 | 85.1 | 96.06 | 0.08 | 3.99 |
| 2.0 | 0.2 | 7.8 | 2.6 | 3.1 | 85.3 | 96.13 | 0.08 | 3.88 |
| 2.0 | 0.4 | 7.8 | 2.7 | 3.3 | 85.5 | 96.12 | 0.08 | 3.78 |
| 2.0 | 0.6 | 7.8 | 2.9 | 3.1 | 85.7 | 96.17 | 0.13 | 3.71 |
| 2.0 | 0.8 | 7.8 | 2.8 | 3.1 | 85.7 | 96.17 | 0.05 | 3.70 |
| 2.0 | 1.0 | 7.8 | 2.8 | 3.1 | 85.9 | 96.23 | 0.06 | 3.66 |

The data presented in these Examples 2-5 further shows a benefit to using the bleaching mixture of hydrosulfite and a second reducing agent, e.g., borohydride as opposed to using hydrosulfite alone, as noted in Example 1. The data also shows that by using the combination of hydrosulfite and sodium borohydride solution, a lower amount of dissolved solids is present relative to the amount of hydrosulfite which would otherwise be needed to obtain the same brightness and color reduction. This may result in processed clays of desired lower viscosity.

### EXAMPLE 6

The procedure set forth in Example 1 was carried out using similar clay samples, except that bisulfite was used in place of hydrosulfite in the amounts shown and borohydride was maintained at a constant level. The data for this Example is shown in Table 6 below.

**Table 6**

| | Bright. (% ISO) for Variable Bisulfite:Borohydride Molar Ratios | | | |
|---|---|---|---|---|
| Na Borohydride Solution lb/ton | 8:1 | 8.5:1 | 12:1 | 16:1 |
| 0:0 | 82.1 | 82.1 | 82.1 | 82.1 |
| 0.5 | 83.9 | 84.2 | 84.0 | 84.4 |
| 1.0 | 84.9 | 85.5 | 85.6 | 85.6 |

This aspect of the invention also shows how brightness gain varies with an increase in the molar ratio of bisulfite to the second reducing agent (borohydride) in the bleaching mixture.

The foregoing description of the present invention is merely illustrative thereof, and it is understood that variations and modification can be made without departing from the spirit or scope of the invention.

## Claims

1. A process for bleaching kaolin clay comprising contacting kaolin clay with (a) hydrosulfite and/or bisulfite and (b) a second reducing agent.

2. The process of claim 1 wherein the kaolin clay and hydrosulfite and/or bisulfite and the second reducing agent provides an acidic admixture.

3. The process of claim 2 wherein the admixture has a pH more acidic than about 5.0.

4. The process of claim 2 wherein the admixture has a pH of between about 2.0 and about 4.0.

5. The process of claim 2 wherein the admixture has a pH of between about 2.8 and about 3.2.

6. The process of claim 1 wherein the second reducing agent comprises a Group III element.

7. The process of claim 1 wherein the second reducing agent comprises a hydride of a Group III element.

8. The process of claim 1 wherein the second reducing agent is an aluminum or boron reagent.

9. The process of claim 1 wherein the second reducing agent is a borohydride or an aluminum hydride.

10. The method of claim 1 wherein the second reducing agent is present in an amount of less than about 1 wt. %, based on total combined weight of the hydrosulfite and/or bisulfite and the second reducing agent.

11. The process of claim 1 comprising providing an acidified mixture of the kaolin clay and admixing the kaolin clay mixture and the hydrosulfite and/or bisulfite and the second reducing agent.

12. The process of claim 11 wherein the mixture has a pH more acidic than pH 5.0.

13. The process of claim 11 wherein the pH of the mixture is between about 2.0 and about 4.0.

14. The process of claim 1 further comprising allowing the kaolin clay and the hydrosulfite and/or bisulfite and the second reducing agent to react to substantial completion, and recovering the bleached kaolin clay.

15. The method of claim 1 wherein the kaolin clay is present as an aqueous suspension in an amount of from about 10 to about 70 wt. % based on total weight of the suspension.

16. The method of claim 15 wherein the kaolin clay is present as an aqueous suspension in an amount of from about 10 to about 35 wt. % based on total weight of the suspension.

17. A process for bleaching kaolin clay comprising contacting kaolin clay with (a) a hydrosulfite and/or bisulfite and (b) a second reagent comprising a Group III element.

18. The process of claim 17 wherein the second reagent comprises a borohydride reagent.

19. The process of claim 17 wherein an excess molar amount of bisulfite is present relative to the second reagent.

20. A process for bleaching a mineral or other inorganic material comprising contacting the mineral or other inorganic material to be bleached with (a) hydrosulfite and/or bisulfite and (b) a second reducing agent.

21. The process of claim 20 wherein the kaolin clay and hydrosulfite and/or bisulfite and the second reducing agent provides an acidic admixture.

22. The process of claim 20 wherein the second reducing agent comprises a Group III element.

23. The process of claim 20 wherein the second reducing agent comprises a hydride of a Group III element.

24. A bleached kaolin clay or other bleached mineral obtainable by a method comprising contacting kaolin clay or other mineral to be bleached with (a) a hydrosulfite and/or bisulfite and (b) a second reducing agent.

25. The bleached clay or other mineral of claim 24 wherein the kaolin clay or other mineral and the kaolin clay and hydrosulfite and/or bisulfite and the second reducing agent provides an acidic admixture.

26. The bleached clay or other mineral of claim 24 wherein the second reducing agent comprises a Group III element.

27. The bleached clay or other mineral of claim 24 wherein the second reducing agent is an aluminum or boron reagent.

28. A bleached clay or other mineral of claim 24 wherein bleached clay is obtained having a brightness gain of at least about 0.5 % ISO to about 20 % ISO.

29. A bleached clay or other mineral of claim 24 wherein bleached clay is obtained having a brightness gain of at least about 0.5 % ISO to about 10 % ISO.

30. A paper substrate having a coating or filler comprising the bleached kaolin clay of claim 24.

31. The substrate of claim 30 wherein the paper substrate is a paper board substrate.
